# EUROPEAN PATENT APPLICATION

(11) **EP 2 025 236 A1**
(43) Date of publication of application: **18.02.2009**
(21) Application number: 07113045.4
(22) Date of filing: 24.07.2007
(51) Int. Cl.: A23C 11/10, A23L 1/03, A23L 1/24, A23J 3/34

(54) **Soy-based aqueous food concentrate**

(71) Applicant: Nestec S.A., 1800 Vevey (CH)
(72) Inventor: Fischer, Caroline, 3510 Konolfingen (CH); Berrocal, Rafael, 1906 St. Légier (CH); Maynard, Françoise, 3095 Speigel bei Bern (CH)
(74) Representative: Rupp, Christian

(57) **Abstract**

The present invention relates to soy-based aqueous concentrated food composition which are stable to cooking conditions, i.e. do not undergo decomposition or separation upon prolonged heat and/or acid treatment. The invention also relates to the use of partially hydrolysed soy protein to improve the stability of said compositions and to a method for preparing a stable soy-based concentrated food composition.

## Description

### Field of the invention

The present invention relates to soy-based concentrated aqueous food composition which are stable to cooking conditions, i.e. do not undergo decomposition or separation upon prolonged heat and/or acid treatment. The invention also relates to the use of partially hydrolysed soy protein to improve the stability of said compositions and to a method for preparing a stable soy-based concentrated food composition.

### Background of the invention

Soy protein has been used in recent years in nutrition as an alternative to dairy protein. In milk or cream-type products, for example, it presents the advantage of a lactose-free composition, as well as a product free of dairy proteins.

A number of soy-based products are to be found on the market, for instance from the company Alpro. These products range from milk or cream alternatives to fermented soy milk products.

US 6,808,736 B2 relates to infant nutritional formulations which are easy to digest and well tolerated. The compositions comprise soy protein and hydrolysates thereof.

There still is room for improvement in the field of milk alternatives, in particular of concentrated milk alternatives based on soy protein.

### Object of the invention

The object of the invention is thus to provide an aqueous soy based alternative to concentrated milk products, which can be used in a wide, varied range of applications.

### Summary of the invention

Accordingly, this object is solved by means of the features of the independent claims. The dependent claims further develop the central idea of the invention.

The invention thus proposes in a first aspect a soy-based concentrated aqueous food composition suitable for cooking applications, comprising partially hydrolysed soy protein, fat, wherein the total solids content is at least 14%.

In a second aspect, the invention relates to the use of partially hydrolysed soy protein for improving the stability of a concentrated soy-based aqueous food composition.

Similarly a method for improving the cooking stability of concentrated soy-based aqueous food compositions, comprising adding partially hydrolysed soy protein to said food composition, forms part of the present invention.

Finally, a method for producing a stable concentrated soy-based aqueous food composition, comprising the steps of
a. recombining partially hydrolysed soy protein in water,
b. mixing the recombined partially hydrolysed soy protein with fat and optionally further ingredients to obtain a stable mix having a total solids content of at least 14%,
c. pasteurising the mix,
d. homogenising the mix and
e. sterilising the mix,
also relates to an aspect of the present invention.

### Detailed description of the invention

The present invention relates to soy-based concentrated aqueous food compositions. By "aqueous" is meant a food composition which is in a liquid form, which may be more or less viscous. The food compositions are suitable for cooking applications in that they are stable to heat, acidic environment, the presence of free ions etc. By "stable" is meant that no flocculation or phase separation or curding occurs when subjected to harsh conditions such as heat, acid, free ions etc.

The soy-based concentrated aqueous food compositions of the invention comprise partially hydrolysed soy protein, fat and have a total solids content of at least 14%. By "partially hydrolysed soy protein" is meant a mixture obtainable by hydrolysis of soy protein, i.e. a mixture which will contain various hydrolysis products of soy protein and also intact soy protein.

Preferably, the total solids content of the food composition is at least 15%, more preferably at least 16%. The total solids content may also be no more than 35%, preferably no more than 30%, more preferably no more than 28%. Most preferably, the total solids content is about 18%.

The advantage of the present concentrated food composition is that it remains stable under extreme conditions such as cooking for long periods of time, for example. This is traditionally difficult to achieve due to the presence of soy protein. For instance, as a comparative basis, soy milk with approximately 3% protein is not stable in cooking applications. Furthermore, it presents the nutritional and beneficial advantages provided by soy protein.

The present invention now offers a soy-based concentrated food product which overcomes the instability issues of other protein-containing soy products. It has been found that the presence of a partially hydrolysed soy protein in the food composition improves the stability to cooking conditions (heat, acid, free ions etc.). Furthermore, it has been found that the higher the degree of hydrolysis of the soy protein, the better the properties of the food composition regarding stability.

Thus, the composition of the invention comprises partially hydrolysed soy protein, also known in the art as soy protein hydrolysates.

Partially hydrolysed soy protein is available commercially, for example under the brand Supro^{®}. Typically, the partially hydrolysed soy protein has a non-protein nitrogen / total nitrogen (NPN/TN) ratio of 2 to 30%, preferably 4 to 25%. Most preferably the NPN/TN ratio is about 20%. Similarly, the amino nitrogen / total nitrogen (AN/TN) ratio (as measured by the TNBS method) is between 2.0 and 5.0, preferably 2.5 to 4.8, most preferably about 4.5.

The partially hydrolysed soy protein used in the present invention may originate from a soy protein isolate, obtainable commercially, or from any soy protein sources such as soybean extract, soybean concentrate, soybean flour. Preferably, it originates from a soy protein isolate comprising at least 70% soy protein, preferably at least 80% soy protein.

The total protein content in the composition of the inventions is between 0.5-10%, preferably 1 to 8%, more preferably more than 5%.

In a preferred embodiment, the total protein content is provided by the partially hydrolysed soy protein. Alternatively, the total protein content may additionally include other protein sources such as rice protein, dairy protein such as whey protein and/or caseinate, any vegetable protein, and any combinations thereof.

The fat present in the present compositions may be selected from palm oil, coconut oil, olive oil, any vegetable oil or fat, milk fat etc. Preferably, it is soybean oil. The fat content of the present compositions ranges from 1 to 10%, preferably 1 to 5%, more preferable 1 to 4%, most preferably less than 4%. Thus, reduced fat food compositions also form part of the present invention.

The food compositions of the present invention may comprise further ingredients selected from any of viscosifying/stabilising agents such as carrageenan, carbohydrates such as maltodextrins, starches, lactose, glucose, sucrose, buffering salts, vitamins, minerals such as calcium, flavourings, spices, other protein sources such as rice protein, milk protein such as whey protein and/or caseinate, vegetable protein or any combinations thereof.

Carbohydrates may be present in the composition in an amount of 1 to 20%, preferably 5 to 15%. The presence of carbohydrates help in providing more body to the present compositions.

In a preferred embodiment, the further ingredients are maltodextrin and carrageenan. Preferably these are present in an amount of 5-10% and 0.001-0.05% respectively in the food composition. Most preferably, the maltodextrin and carrageenan are present in an amount of 8% and 0.01% respectively.

If calcium is added to the present compositions, it is preferably present in an amount between 50-300mg per 100g of food composition.

The food compositions of the present invention are stable to temperatures of at least up to 200°C for at least up to 30 minutes. Furthermore, they are also stable in acidic conditions, such as pH values of less than 7, e.g. pH values between 5 and 6, in particular in the presence of heat. The presence of free ions also does not impact on the stability of the present compositions. The compositions are therefore completely suitable to cooking applications, where heat, acidity and the presence of free ions from nutritional ingredients is often an issue for protein containing compositions, in particular for soy protein compositions.

Preferably, the compositions of the invention are not infant formulae, as they are intended to be cooked and processed in a way which is not necessarily suitable for infants.

In an embodiment of the invention, the soy-based aqueous food composition may comprise only non-dairy ingredients.

The use of partially hydrolysed soy protein for improving the stability of a concentrated soy-based aqueous food composition thus forms part of the present invention.

Preferably, the food composition is stable to any of heat, acidity, free ions etc. for at least 30 minutes. Free ions could be provided, for example, by meat, vegetable products or similar ingredients. The use of partially hydrolysed soy protein is thus advantageous for cooking applications.

Furthermore, the product has body and desirable organoleptic properties.

The present invention also provides a method for the production of a stable concentrated soy-based food composition.

The first step in the method comprises recombining partially hydrolysed soy protein in water. The water is preferably heated to a temperature of between 60 and 85°C, more preferably about 75°C. The suspension is then mixed in the water under high shearing for about 15 minutes.

Preferably, the partially hydrolysed soy protein has a non-protein nitrogen / total nitrogen ratio of 2 to 30%, preferably 4 to 25%, most preferably about 20%.

The amount of partially hydrolysed soy protein added to water is worked out in function of the desired protein content of the final composition. This is easily determined by a person of skill in the art.

The recombined partially hydrolysed soy protein is then mixed with fat. The fat may be selected from palm oil, coconut oil, olive oil, any vegetable oil or fat, milk fat etc. Preferably, it is soybean oil.

Optionally, further ingredients such as any of viscosifying/stabilising agents such as carrageenan, carbohydrates such as maltodextrins, starches, lactose, glucose, sucrose, buffering salts, vitamins, minerals such as calcium, flavourings, spices, other protein sources such as rice protein, milk protein such as whey protein or caseinate or any combinations thereof may be added. In a preferred embodiment, maltodextrin and carrageenan are added to the composition, in an amount of 5-10% and 0.001-0.05% respectively of the final food composition. Most preferably maltodextrin and carrageenan are added such that they are in an amount of 8% and 0.01% respectively in the final food composition.

The mixture is adjusted so that a total solids content of at least 14%, preferably at least 15%, more preferably at least 16% is achieved. The total solids content is also preferably no more than 35%, more preferably no more than 30%, even more preferably no more than 28%. In a most preferred embodiment, the mixture has a total solids content of about 18%.

After combining all desired ingredients, the mix is mixed under high shearing prior to de-aeration and pasteurisation. Pasteurisation is carried out under standard conditions, e.g. at a temperature of about 85-95°C for about 5-45s.

The mix is then homogenised. Typical homogenisation may be carried out in two stages, stage one being at 250bar and stage two being at 50bar.

The mix is then cooled, optionally filled in cans and sterilised, preferably using a retort process.

The present invention is further illustrated herein by the following non-limiting examples.

### Examples

### Example 1

Products of the invention were prepared by a method comprising recombination partially hydrolysed soy protein in water, mixing with fat, maltodextrin and carrageenan, pasteurising the mix, homogenising, filling in cans and sterilising the mix. The following nutritional compositions could be obtained:

| | **Products of the invention** |
|---|---|
| Protein (%) | 4-6 |
| Fat (%) | 2-4 |
| Carbohydrate (%) | 8-10 |
| Total solids (%) | 17-21 |
| Water (%) | 79-83 |

### Example 2

### Coffee test

To test the stability of the product of the invention, a sample was placed in coffee (pH 5, 85°C) and flocculation was assessed visually. It was observed that the product was stable for at least 2 minutes without any signs of decomposition. Note that after 2 minutes, the temperature of the coffee decreased, and the product remained stable.

### Cooking performance

A sample of the product of the invention was used in preparing a beef stroganoff. After 5 minutes of cooking, the product did not exhibit any visual or perceptible lumps.

To assess the stability on a longer time scale, a sample of the product of the invention was used in cooking baked penne. The same cooking performance test was carried out in the preparation of baked penne (temperature 200°C, 25 minutes) and once again, the product of the invention did not exhibit any signs of flocculation or decomposition, indicating that it is stable to heat for a long period of time.

## Claims

1. Soy-based concentrated aqueous food composition suitable for cooking applications, comprising partially hydrolysed soy protein, fat, wherein the total solids content is at least 14%.

2. Food composition according to claim 1, wherein the total solids content is at least 15%, preferably at least 16%.

3. Food composition according to any of claims 1 or 2, wherein the total solids content is no more than 35%, preferably no more than 30%, more preferably no more than 28%.

4. Food composition according to any of claims 1 to 3, wherein the partially hydrolysed soy protein has a non-protein nitrogen / total nitrogen ratio of 2 to 30%, preferably 4 to 25%, most preferably 20%.

5. Food composition according to any of claims 1 to 4, wherein the fat is selected from palm oil, coconut oil, olive oil, any vegetable oil or fat, milk fat, preferably the fat is soybean oil.

6. Food composition according to claim 5, wherein the fat is present in an amount from 1 to 10%, preferably 1 to 5%, more preferably 1 to 4%, most preferably less than 4%.

7. Food composition according to any of claims 1 to 6, wherein the protein content is 0.5 to 10%, preferably 1 to 8%, more preferably more than 5%.

8. Food composition according to any of claims 1 to 7, wherein the total protein content is provided by partially hydrolysed soy protein.

9. Food composition according to claim 8, wherein the total protein content includes other protein sources such as rice protein, dairy protein such as whey protein and/or caseinate, vegetable protein, and any combinations thereof.

10. Food composition according to any of claims 1 to 9, which comprises further ingredients selected from any of viscosifying/stabilising agents such as carrageenan, carbohydrates such as maltodextrins, starches, lactose, glucose, sucrose, buffering salts, vitamins, minerals such as calcium, flavourings, spices, other protein sources such as rice protein, milk protein such as whey protein and/or caseinate, vegetable protein or any combinations thereof.

11. Food composition according to claim 10, wherein the further ingredients are maltodextrin and carrageenan.

12. Food composition according to any of claims 1 to 11, wherein carbohydrates are present in an amount of 1 to 20%, preferably 5 to 15%.

13. Food composition according to any of claims 1 to 12, wherein calcium is present in an amount of between 50-300mg per 100g of food composition.

14. Food composition according to any of claims 1 to 13, wherein the composition is stable to a temperature of at least up to 200°C for at least up to 30 minutes.

15. Food composition according to any of claims 1 to 14, wherein the composition is stable in a pH of 5 to 7 and/or in the presence of free ions.

16. Food composition according to any of claims 1 to 15, which is not an infant formula.

17. Food composition according to any of claims 1 to 16, which comprises only non-dairy ingredients.

18. Use of partially hydrolysed soy protein in a concentrated soy-based aqueous food composition for improving the stability thereof.

19. Use according to claim 18, wherein the concentrated soy-based food composition is stable to any of heat, acidity, free ions or combinations thereof for at least 5 minutes.

20. Use according to claims 18 or 19, for cooking applications.

21. Use according to any of claims 18 to 20, wherein the food composition comprises fat and has a total solids content of at least 14%.

22. Method for improving the cooking stability of concentrated soy-based aqueous food compositions, comprising adding partially hydrolysed soy protein to said food composition.

23. Method for producing a stable concentrated soy-based aqueous food composition, comprising the steps of
a. recombining partially hydrolysed soy protein in water,
b. mixing the recombined partially hydrolysed soy protein with fat and optionally further ingredients to obtain a stable mix having a total solids content of at least 14%,
c. pasteurising the mix,
d. homogenising the mix and
e. sterilising the mix.

24. Method according to claim 23, wherein the partially hydrolysed soy protein has a non-protein nitrogen / total nitrogen ratio of 2 to 30%, preferably 4 to 25%, most preferably about 20%.

25. Method according to any of claims 23 or 24, wherein the fat is selected from palm oil, coconut oil, olive oil, any vegetable oil or fat, milk fat, preferably the fat is soybean oil.

26. Method according to any of claims 23 to 25, wherein the further ingredients include any of viscosifying/stabilising agents such as carrageenan, carbohydrates such as maltodextrins, starches, lactose, glucose, sucrose, buffering salts, vitamins, minerals such as calcium, flavourings, spices, other protein sources such as rice protein, milk protein such as whey protein and/or caseinate, vegetable protein or any combinations thereof.

27. Method according to any of claims 23 to 26, wherein the total solids content of the mix is at least 15%, preferably at least 16%.

28. Method according to any of claims 23 to 27, wherein the total solids content is no more than 35%, preferably no more than 30%, more preferably no more than 28%.

29. Method according to any of claims 23 to 28, wherein the mix is filled into cans after homogenisation.

30. Method according to any of claims 23 to 29, wherein the mix is sterilised by a retort process.
